Europäisches Patentamt

European Patent Office

Office européen des brevets

(19)

(11) **EP 1 116 758 A2**

(12) **EUROPÄISCHE PATENTANMELDUNG**

(43) Veröffentlichungstag:
**18.07.2001 Patentblatt 2001/29**

(51) Int Cl.⁷: **C09D 175/04**, C09D 201/08

(21) Anmeldenummer: **00127739.1**

(22) Anmeldetag: **19.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.12.1999 AT 217399**

(71) Anmelder: **Solutia Austria GmbH**
**8402 Werndorf (AT)**

(72) Erfinder:
• **Dworak, Gert, Dr.**
 **8010 Graz (AT)**
• **Kuttler, Ulrike, Dr.**
 **8302 Vasoldsberg (AT)**

(74) Vertreter: **Zounek, Nikolai, Dipl.-Ing. et al**
 **Patentanwaltskanzlei Zounek,**
 **Industriepark Kalle Albert,**
 **Rheingaustrasse 190-196**
 **65203 Wiesbaden (DE)**

(54) **Wässriges Überzugsmittel**

(57) Beschichtungsmittel insbesondere zur Herstellung von Automobilfüllern, enthaltend ein anionisch stabilisiertes Harz **A**, vorzugsweise ein Kondensationsprodukt **Ak** aus einem Carboxylgruppen aufweisenden Harz **A1** und einem Hydroxylgruppen aufweisenden Harz **A2**, und einen bereits bei Raumtemperatur oder geringfügig erhöhter Temperatur bis maximal 120 °C wirksam werdenden Härter **C**, der eine Mischung eines unblockierten Isocyanats **C1** und eines hydrophilen teilverätherten Aminoplastharzes **C2** enthält.

EP 1 116 758 A2

**Beschreibung**

Die Erfindung betrifft ein wäßriges Überzugsmittel, das vor allem zur Herstellung von Beschichtungen auf Automobilteilen geeignet ist. Die so beschichteten Teile, insbesondere solche, bei denen das hier beschriebene Überzugsmittel als Füllerschicht eingesetzt wird, zeichnen sich durch hohe Härte und Fehlerfreiheit des Lackfilms sowie hohe Steinschlagfestigkeit aus.

In der EP-A 0 594 685 wird die Verwendung von Kondensationsprodukten von Carboxylgruppen-haltigen Polyurethanharzen und Hydroxylgruppen-haltigen, gegebenenfalls urethanmodifizierten Polyesterharzen gemeinsam mit wasserunlöslichen blockierten Isocyanaten zur Herstellung von Einbrennlacken beschrieben. Eine Verbesserung dieser Formulierung mit geringerer Empfindlichkeit gegen das sog. Überbrennen ist aus der EP-A 0 548 873 bekannt, wobei die Verbesserung durch Zusatz eines wasserlöslichen Aminharzes als Vernetzer erreicht wird.

Alle diese bekannten Systeme müssen durch Erhitzen auf solche Temperaturen gehärtet werden, bei denen entweder das als Härter enthaltene blockierte Isocyanat zumindest teilweise entblockiert und damit aktiv wird, oder bis die als Härter enthaltenen Aminoplastharze eine ausreichende (vemetzende) Reaktivität zeigen. Es bestand daher die Aufgabe, solche wäßrigen Beschichtungsmittel bereitzustellen, die sich unter anderem zur Herstellung von Füllerschichten bei der Automobil-Lackierung eignen und die bereits bei Raumtemperatur oder nur geringfügig erhöhter Temperatur (bis zu 120 °C, bevorzugt bis zu 100 °C, und insbesondere bis zu maximal 90 °C) zu Lackfilmen mit solchen Eigenschaften aushärten, die denen des Standes der Technik zumindest ebenbürtig sind

Es wurde nun gefunden, daß durch Verwendung einer Kombination von wasserunlöslichen unblockierten Isocyanaten und wasserlöslichen oder wasserdispergierbaren teilverätherten Aminoplastharzen als Härter gemeinsam mit anionisch stabilisierten, Hydroxylgruppen aufweisenden Harzen, insbesondere Kondensationsprodukten von Hydroxylgruppen-haltigen und Carboxylgruppen-haltigen Harzen, Beschichtungsmittel zugänglich werden, die gegenüber den bekannten Systemen nach der Härtung defektfreie Filme, eine höhere Filmhärte und gute Steinschlagfestigkeit auch bei niedrigen Temperaturen aufweisen.

Gegenstand der Erfindung ist daher ein wäßriges Beschichtungsmittel, enthaltend

-   ein anionisch stabilisiertes, Hydroxylgruppen aufweisendes Harz **A**, und
-   einen Härter **C**, der ein wasserunlösliches unblockiertes Isocyanat **C1** und ein hydrophiles teilveräthertes Aminoplastharz **C2** enthält.

Unter "anionisch stabilisiert" soll hier verstanden werden, daß das betreffende Harz Säuregruppen in einer ausreichenden Menge aufweist, daß bei zumindest teilweiser Neutralisation der Säuregruppen durch Zugabe von Alkalien in Mischung mit Wasser eine Lösung (einphasige Mischung) oder eine Dispersion (mehrphasige Mischung) gebildet wird, die sich nicht spontan und bei Lagerung bei Raumtemperatur während mindestens 7 Tagen nicht entmischt

Bevorzugt ist das anionisch stabilisierte, Hydroxylgruppen aufweisende Harz **A** ein Kondensationsprodukt **Ak** aus einem Säuregruppen aufweisenden Harz **A1** und einem Hydroxylgruppen aufweisenden Harz **A2,** wobei bevorzugt **A1** eine Säurezahl von 100 bis 230 mg/g, insbesondere von 120 bis 160 mg/g, und **A2** bevorzugt eine Hydroxylzahl von 50 bis 500 mg/g, insbesondere von 60 bis 350 mg/g, aufweist.

Die Säurezahl ist gemäß DIN 53 402 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g". Die Hydroxylzahl ist gemäß DIN 53 240 definiert als der Quotient derjenigen Masse $m_{KOH}$ an Kaliumhydroxid, die genausoviel Hydroxylgruppen aufweist wie eine zu untersuchende Probe, und der Masse $m_B$ dieser Probe (Masse des Feststoffes in der Probe bei Lösungen oder Dispersionen); ihre übliche Einheit ist "mg/g".

Das Kondensationsprodukt **Ak** hat bevorzugt eine Säurezahl von 25 bis 75 mg/g, insbesondere 30 bis 50 mg/g. Sein Staudinger- Index ("Grenzviskositätszahl") beträgt üblicherweise 10 bis 20 $cm^3/g$, insbesondere 12 bis 19 $cm^3/g$, und besonders bevorzugt 13 bis 18 $cm^3/g$. Zu seiner Herstellung werden die Komponenten **A1** und **A2** bevorzugt in einem Massenverhältnis von 10 zu 90 bis 80 zu 20, insbesondere von 15 zu 85 bis 40 zu 60, eingesetzt.

Die früher so bezeichnete "Grenzviskositätszahl", nach DIN 1342, Teil 2.4, "Staudinger-Index" $J_g$ genannt, ist der Grenzwert der Staudinger-Funktion $J_v$ bei abnehmender Konzentration und Schubspannung, wobei $J_v$ die auf die Massenkonzentration $\beta_B = m_B / V$ des gelösten Stoffes B (mit der Masse $m_B$ des Stoffes im Volumen $V$ der Lösung) bezogene relative Viskositätsänderung ist, also $J_v = (\eta_r - 1) / \beta_B$. Dabei bedeutet $\eta_r - 1$ die relative Viskositätsänderung, gemäß $\eta_r - 1 = (\eta - \eta_s) / \eta_s$. Die relative Viskosität $\eta_r$ ist der Quotient aus der Viskosität $\eta$ der untersuchten Lösung und der Viskosität $\eta_s$ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für $J$ verwendete Einheit ist "$cm^3/g$"; früher häufig "dl/g".

Die Harze **A1** mit Carboxylgruppen werden bevorzugt ausgewählt aus Polyesterharzen **A11,** Polyurethanharzen **A12,** den sogenannten Maleinatölen **A13,** mit ungesättigten Carbonsäuren gepfropften Fettsäuren und Fettsäuregemischen **A14** sowie den Acrylatharzen **A15.** Anstelle von Harzen mit Carboxylgruppen oder in Mischung mit diesen lassen sich auch mit Phosphorsäure bzw. Phosphonsäuren modifizierte Epoxidharze oder derart modifizierte Umsetzungsprodukte von Epoxidharzen mit Fettsäuren einsetzen, gemeinsam als **A16** bezeichnet. Bevorzugt ist die Säurezahl der Harze **A1** 100 bis 230 mg/g, insbesondere von 70 bis 160 mg/g. Ihr Staudinger-Index, gemessen in Dimethylformamid als Lösungsmittel bei 20 °C, beträgt im allgemeinen ca. 6,5 bis 12 cm$^3$/g, bevorzugt 8 bis 11 cm$^3$/g.

Geeignete Polyesterharze **A11** lassen sich in bekannter Weise herstellen aus Polyolen **A111** und Polycarbonsäuren **A112,** wobei ein Teil, bevorzugt bis zu 25 %, der Stoffmenge der Polyole und Polycarbonsäuren auch durch Hydroxycarbonsäuren **A113** ersetzt sein kann. Durch geeignete Wahl von Art und Menge der Edukte **A111** und **A112** wird sichergestellt, daß der resultierende Polyester eine ausreichende Zahl von Säuregruppen, entsprechend der oben angegebenen Säurezahl, hat. Die Polyole **A111** werden bevorzugt ausgewählt aus den aliphatischen und cycloaliphatischen Alkoholen mit 2 bis 10 Kohlenstoffatomen und im Mittel mindestens zwei Hydroxylgruppen pro Molekül, insbesondere geeignet sind Glykol, 1,2- und 1,3-Propandiol, 1,4-Butandiol, 1,6-Hexandiol, Neopentylglykol, Di- und Triäthylenglykol, Di- und Tripropylenglykol, Glycerin, Trimethylolpropan und Trimethyloläthan. Geeignete Polycarbonsäuren **A112** sind aliphatische, cycloaliphatische und aromatische Polycarbonsäuren wie Adipinsäure, Bernsteinsäure, Cyclohexandicarbonsäure, Phthalsäure, Iso- und Terephthalsäure, Trimellithsäure, Trimesinsäure und Benzophenontetracarbonsäure. Dabei lassen sich auch Verbindungen einsetzen, die sowohl Carbonsäure- als auch Sulfonsäuregruppen aufweisen, wie zum Beispiel Sulfoisophthalsäure.

Geeignete Polyurethanharze **A12** lassen sich darstellen durch Umsetzung von aliphatischen Polyolen **A121** wie unter **A111** definiert, Hydroxyalkancarbonsäuren **A122** mit mindestens einer, bevorzugt zwei, Hydroxylgruppen und einer unter Veresterungsbedingungen im Vergleich zu Adipinsäure weniger reaktiven Carboxylgruppe, bevorzugt eingesetzt werden Dihydroxymonocarbonsäuren ausgewählt aus Dimethylolessigsäure, Dimethylolbuttersäure und Dimethylolpropionsäure, oligomeren oder polymeren Verbindungen **A125** mit im Mittel mindestens zwei Hydroxylgruppen pro Molekül, die ausgewählt werden können aus Polyätherpolyolen **A1251**, Polyesterpolyolen **A1252**, Polycarbonatpolyolen **A1253**, gesättigten und ungesättigten Dihydroxyaliphaten **A1254**, die durch Oligomerisieren oder Polymerisieren von Dienen mit 4 bis 12 Kohlenstoffatomen, insbesondere Butadien, Isopren und Dimethylbutadien und anschließendes Funktionalisieren in bekannter Weise erhältlich sind, sowie mehrfunktionellen Isocyanaten **A123**, bevorzugt ausgewählt aus aromatischen, cycloaliphatischen sowie linearen und verzweigten aliphatischen difunktionellen Isocyanaten wie Toluylendiisocyanat, Bis(4-isocyanatophenyl)methan, Tetramethylxylylendiisocyanat, Isophorondiisocyanat, Bis(4-isocyanatocyclohexyl)methan, Hexamethylendiisocyanat und 1,6-Diisocyanato-3,3,5- und -3,5,5-trimethylhexan.

Besonders bevorzugt werden solche Polyurethanharze **A12,** die durch Umsetzung einer Mischung von einem oder mehreren Polyolen **A121** mit einer Hydroxyalkancarbonsäure **A122** und mindestens einem mehrfunktionellen Isocyanat **A123** hergestellt werden, das mit Monohydroxyverbindungen **A124** ausgewählt aus Polyalkylenglykol-Monoalkyläthern HO-(R$^1$-O)$_n$-R$^2$, wobei R$^1$ ein linearer oder verzweigter Alkylenrest mit 2 bis 6, bevorzugt 2 bis 4 Kohlenstoffatomen ist, und R$^2$ eine Alkylgruppe mit 1 bis 8, bevorzugt 2 bis 6 Kohlenstoffatomen ist, und Oximen von aliphatischen Ketonen mit 3 bis 9 Kohlenstoffatomen zumindest teilweise, üblicherweise zu mehr als 20 %, bevorzugt zu mehr als 35 %, und insbesondere zu 50 % und mehr blockiert ist. Der Blockierungsgrad wird hier angegeben als Anteil der blockierten Isocyanatgruppen, bezogen auf die in dem Isocyanat **A123** insgesamt vorhandenen (blockierten und unblockierten) Isocyanatgruppen. Es ist weiter bevorzugt, die Polyurethanharze **A21** derart herzustellen, daß eine Mischung eines mehrfunktionellen Isocyanats und eines auf die oben beschriebene Weise blockierten mehrfunktionellen Isocyanats mit der Hydroxyalkancarbonsäure **A122** und den Polyolen **A121** und **A125** umgesetzt werden, wobei die Mischungsverhältnisse so gewählt werden, daß in jedem Molekül des Polyurethans **A12** im Mittel eine oder mehr als eine endständige blockierte Isocyanatgruppe vorliegt.

Als "Maleinatöl" **A13** werden Umsetzungsprodukte von (trocknenden) Ölen **A131** und olefinisch ungesättigten Carbonsäuren **A132,** besonders Dicarbonsäuren bezeichnet. Als Öle **A131** werden bevorzugt trocknende und halbtrocknende Öle wie Leinöl, Tallöl, Rapsöl, Sonnenblumenöl und Baumwollsaatöl eingesetzt, mit Jodzahlen von ca. 100 bis ca.180. Die ungesättigten Carbonsäuren **A132** werden so ausgewählt, daß sie unter den üblichen Bedingungen radikalisch (nach Zusatz von Initiatoren oder nach Erwärmen) auf die vorgelegten Öle mit einer Ausbeute (Anteil der nach der Reaktion mit dem Ö1 verbundenen ungesättigten Carbonsäuren, bezogen auf die zur Reaktion eingesetzte Menge) von über 50 % pfropfen. Besonders geeignet ist Maleinsäure in Form ihres Anhydrids, ferner Tetrahydrophthalsäureanhydrid, Acryl- und Methacrylsäure, sowie Citracon-, Mesacon- und Itaconsäure.

Ebenfalls geeignete Harze **A14** sind mit den unter **A132** genannten ungesättigten Säuren gepfropfte Fettsäuren oder Fettsäuregemische **A141,** wobei die letzteren durch Verseifen von Fetten in technischen Mengen zugänglich sind. Die geeigneten Fettsäuren weisen mindestens eine olefinische Doppelbindung im Molekül auf, beispielhaft werden Ölsäure, Linol- und Linolensäure, Ricinolsäure und Elaidinsäure sowie die genannten technischen Gemische solcher Säuren aufgezählt.

Weitere geeignete Harze **A15** sind die durch Copolymerisation von olefinisch ungesättigten Carbonsäuren **A151** und anderen Vinyl- oder Acryl-Monomeren **A152** zugänglichen sauren Acrylatharze. Die Carbonsäuren sind die bereits unter **A132** genannten, ebenso noch Vinylessigsäure sowie Croton- und Isocrotonsäure und die Halbester von olefinisch ungesättigten Dicarbonsäuren wie z. B. Monomethylmaleinat und -fumarat. Geeignete Monomere **A152** sind die Alkylester von Acryl- und Methacrylsäure mit bevorzugt 1 bis 8 Kohlenstoffatomen in der Alkylgruppe, (Meth)Acrylnitril, Hydroxyalkyl(meth)acrylate mit 2 bis 6 Kohlenstoffatomen in der Alkylgruppe, Styrol, Vinyltoluol, sowie Vinylester von aliphatischen linearen und verzweigten Carbonsäuren mit 2 bis 15 Kohlenstoffatomen, insbesondere Vinylacetat und der Vinylester eines Gemisches von verzweigten aliphatischen Carbonsäuren mit im Mittel 9 bis 11 Kohlenstoffatomen. Vorteilhaft ist auch die Copolymerisation der unter **A151** und **A152** genannten Monomeren in Gegenwart von solchen Verbindungen **A153,** die mit den ungesättigten Carbonsäuren unter Addition und Bildung einer Carboxyl- oder Hydroxyl-funktionellen copolymerisierbaren Verbindung reagieren. Derartige Verbindungen sind beispielsweise Lactone **A1531,** die mit den Carbonsäuren **A151** unter Ringöffnung zu einer Carboxyl-funktionellen ungesättigten Verbindung reagieren, und Epoxide **A1532,** insbesondere Glycidylester von in $\alpha$-Stellung verzweigten gesättigten aliphatischen Säuren mit 5 bis 12 Kohlenstoffatomen wie der Neodecansäure oder der Neopentansäure, die unter Addition mit der Säure **A151** zu einer copolymerisierbaren Verbindung mit einer Hydroxylgruppe reagieren. Dabei sind die Stoffmengen der eingesetzten Verbindungen so zu bemessen, daß die geforderte Säurezahl erreicht wird. Legt man diese Verbindung **A153** vor und führt die Polymerisation so durch, daß diese Verbindung als (alleiniges) Lösungsmittel verwendet wird, so erhält man lösungsmittelfreie Acrylatharze.

Die mit Phosphorsäure oder Phosphonsäuren modifizierten Epoxidharze oder die ebenso modifizierten Addukte von Epoxidharzen und Fettsäuren, gemeinsam **A16** genannt, werden hergestellt durch Umsetzung vorzugsweise in einem Lösungsmittel von Phosphorsäure oder organischen Phosphonsäuren, die mindestens zweibasig sind, mit Epoxidharzen oder Addukten von Epoxidharzen und Fettsäuren. Dabei wird die Stoffmenge der eingesetzten Phosphor- oder Phosphonsäure üblicherweise so bemessen, daß sämtliche Epoxidgruppen durch die Umsetzung mit der Säure verbraucht werden, und daß eine ausreichende Anzahl von Säuregruppen auch nach der Reaktion noch zur Verfügung steht. Das entstandene Harz weist Hydroxylgruppen (aus der Reaktion der Oxirangruppe mit der Säurefunktion) auf, wobei diese Hydroxylgruppen in ß-Stellung zur Estergruppierung stehen, gegebenenfalls Hydroxylgruppen in den ätherartig gebundenen Resten des Glycidylalkohols aus dem Epoxidharz, sowie Säuregruppen der Phosphor- bzw. Phosphonsäure, die nicht durch die Umsetzung mit dem Epoxid verbraucht wurden.

Als Hydroxylgruppen-haltige Harze **A2** sind insbesondere Polyester **A21,** Acrylatharze **A22,** Polyurethanharze **A23** sowie Epoxidharze **A24** geeignet. Die Hydroxylzahl der Harze **A2** beträgt im allgemeinen ca. 50 bis 500 mg/g, vorzugsweise ca. 60 bis 350 mg/g, und besonders bevorzugt 70 bis 300 mg/g. Ihr Staudinger-Index, gemessen bei 20 °C in Dimethylformamid als Lösungsmittel, beträgt bevorzugt 8 bis 13 cm$^3$/g, insbesondere 9,5 bis 12 cm$^3$/g.

Die Polyester **A21** werden wie die Komponente **A11** durch Polykondensation hergestellt; lediglich ist hier Art und Menge der Edukte so zu wählen, daß ein Überschuß an Hydroxylgruppen gegenüber den Säuregruppen besteht, wobei das Kondensationsprodukt die oben angegebene Hydroxylzahl aufweisen muß. Dies kann erreicht werden, indem mehrwertige Alkohole mit im Mittel mindestens zwei, bevorzugt mindestens 2,1 Hydroxylgruppen pro Molekül, mit Dicarbonsäuren oder einem Gemisch von Poly- und Monocarbonsäuren mit im Mittel maximal zwei, bevorzugt 1,5 bis 1,95 Säuregruppen pro Molekül eingesetzt werden. Eine andere Möglichkeit ist, eine entsprechenden Überschuß an Hydroxylkomponenten (Polyolen) **A211** gegenüber den Säuren **A212** einzusetzen. Die Polyole **A211** und die mehrfunktionellen Säuren **A212,** die in der Polykondensationsreaktion zu den Hydroxylgruppen-haltigen Polyestern **A21** umgesetzt werden, werden aus den gleichen Gruppen wie die Polyole **A111** und die Säuren **A112** ausgewählt. Es ist hier ebenso möglich, einen Teil der Polyole und Säuren durch Hydroxysäuren entsprechend **A113** zu ersetzen. Es wird dabei angestrebt, daß die Säurezahl der Komponente **A2** nicht über 20 mg/g, bevorzugt unter 18 mg/g, liegt. Die Säurezahl läßt sich beispielsweise dadurch herabsetzen, daß der fertig kondensierte Polyester **A21** mit einer geringen Menge einwertiger aliphatischer Alkohole **A114** unter Veresterungsbedingungen nachreagiert wird. Dabei ist die Menge an Alkoholen **A114** so zu bemessen, daß zwar die Säurezahl unter den Grenzwert abgesenkt wird, jedoch der Staudinger-Index nicht unter die genannte untere Grenze absinkt. Geeignete aliphatische Alkohole sind beispielsweise n-Hexanol, 2-Äthylhexanol, Isodecylalkohol und Tridecylalkohol.

Die Hydroxylgruppen-haltigen Acrylatharze **A22** sind zugänglich durch üblicherweise radikalisch initiierte Copolymerisation von Hydroxylgruppen-haltigen Acrylmonomeren **A221** mit anderen Vinyl- oder Acrylmonomeren **A222** ohne solche Funktionalität. Beispiele für die Monomeren **A221** sind Ester der Acryl- und Methacrylsäure mit aliphatischen Polyolen, insbesondere Diolen mit 2 bis 10 Kohlenstoffatomen, wie Hydroxyäthyl- und Hydroxypropyl-(meth)acrylat. Beispiele für die Monomeren **A222** sind die Alkylester der (Meth)acrylsäure mit 1 bis 10 Kohlenstoffatomen in der Alkylgruppe wie Methyl-, Äthyl-, n-Butyl- und 2-Äthylhexyl(meth)acrylat, (Meth)Acrylnitril, Styrol, Vinyltoluol, Vinylester von aliphatischen Monocarbonsäuren mit 1 bis 10 Kohlenstoffatomen wie Vinylacetat und Vinylpropionat. Bevorzugt werden auch solche Acrylatharze, die nicht wie üblich in Lösung, sondern in einer Substanzpolymerisation hergestellt werden, wobei eine flüssige cyclische Verbindung vorgelegt wird, die als Lösungsmittel bei der Polymerisationsreaktion fungiert, und die durch Ringöffnung bei der Reaktion mit einem der eingesetzten Monomeren eine copolymerisierbare Verbindung bildet. Beispiele für solche Verbindungen sind Glycidylester von in $\alpha$-Stellung verzweig-

ten aliphatischen Monocarbonsäuren, insbesondere der als Neopentansäure oder Neodecansäure kommerziell erhältlichen Säuren bzw. Säuregemische, weiter Lactone wie ε-Caprolacton oder δ-Valerolacton. Werden diese Glycidylester eingesetzt, so ist es erforderlich, mindestens einen zur Stoffmenge der Epoxidgruppen äquimolaren Anteil an Säuregruppen-haltigen Comonomeren, wie (Meth)Acrylsäure, bei der Polymerisation einzusetzen. Die Lactone können unter Ringöffnung sowohl mit Hydroxylgruppen-haltigen als auch mit Säuregruppen-haltigen Comonomeren eingesetzt werden.

Hydroxylgruppen-haltige Polyurethanharze **A23** sind in bekannter Weise zugänglich durch Addition von oligomeren oder polymeren Polyolen **A231,** ausgewählt aus Polyesterpolyolen, Polyätherpolyolen, Polycarbonatpolyolen und Polyolefinpolyolen, gegebenenfalls niedermolekularen aliphatischen Diolen oder Polyolen **A233** mit 2 bis 12 Kohlenstoffatomen, wie beispielsweise Äthylenglykol, 1,2- und 1,3-Propylenglykol, 1,4-Butandiol, 1,6-Hexandiol, Di- und Tri- Äthylen- bzw. Propylenglykol, Neopentylglykol, Trimethylolpropan, Pentaerythrit, und mehrfunktionellen Isocyanaten **A232,** wobei die letzteren in stöchiometrischem Unterschuß eingesetzt werden, derart daß die Anzahl der Hydroxylgruppen in der Reaktionsmischung größer ist als die der Isocyanatgruppen. Geeignete Polyole sind insbesondere oligomere und polymere Dihydroxyverbindungen mit einer zahlenmittleren molaren Masse $M_n$ von ca. 200 bis 10000 g/mol. Durch Polyaddition mit mehrfunktionellen, insbesondere difunktionellen Isocyanaten werden sie bis zu dem angestrebten Wert für den Staudinger-Index von mindestens 8 cm$^3$/g, vorzugsweise mindestens 9,5 cm$^3$/g aufgebaut.

Epoxidharze **A24,** die durch Reaktion von Epichlorhydrin mit aliphatischen oder aromatischen Diolen oder Polyolen, insbesondere Bisphenol A, Bisphenol F, Resorcin, Novolaken oder oligomeren Polyoxyalkylenglykolen mit 2 bis 4, bevorzugt 3 Kohlenstoffatomen in der Alkylengruppe, zugänglich sind, weisen je eingesetztem Epichlorhydrin-Molekül mindestens eine Hydroxylgruppe auf. Anstelle der Reaktion von Epichlorhydrin mit Diolen lassen sich die geeigneten Epoxidharze auch durch die sogenannte Advancement-Reaktion aus Diglycidyläthern von Diolen (wie den oben genannten) oder Diglycidylestern von zweibasigen organischen Säuren mit den genannten Diolen herstellen. Alle bekannten Epoxidharze lassen sich hier einsetzen, soweit sie der Bedingung für die Hydroxylzahl genügen.

Als anionisch stabilisierte Harze **A** lassen sich auch Polyester **Ap** einsetzen, die in bekannter Weise durch Kondensation von mehrfunktionellen Säuren und mehrfunktionellen Hydroxylgruppen-haltigen Verbindungen herstellen lassen. Der zur anionischen Stabilisierung erforderliche Überschuß an Säuregruppen läßt sich erreichen, indem entweder Säuren oder Hydroxylgruppen-haltige Verbindungen mit einer Funktionalität größer als 2 eingesetzt werden, wobei die Mengen der Komponenten so gewählt werden, daß die Stoffmenge der Säuregruppen die der Hydroxylgruppen im gewünschten Maß übersteigt, oder es werden Hydroxylgruppen-haltige Verbindungen eingesetzt, die zusätzlich noch Säuregruppen tragen, die an der Polykondensationsreaktion nicht oder nur in untergeordnetem Maße teilnehmen (maximal 20 % der Säuregruppen werden unter den Kondensationsbedingungen verestert). Auch diese Polyester **Ap** haben bevorzugt eine Säurezahl von ca. 10 bis 60 mg/g, bevorzugt 15 bis 55, und insbesondere 20 bis 50 mg/g. Die Menge der Hydroxylgruppen in **Ap** entspricht einer Hydroxylzahl von mindestens 10 mg/g, bevorzugt 15 bis 200 mg/g und insbesondere 25 bis 150 mg/g. Der Polyester **Ap** weist üblicherweise einen Staudinger-Index $J_0$ von 5 bis 25 cm$^3$/g auf, bevorzugt 7 bis 22 und insbesondere 10 bis 20 cm$^3$/g, gemessen in Dimethylformamid bei 20 °C.

Weitere anionisch stabilisierte Harze **Ae,** die für die Erfindung brauchbar sind, sind die bereits bei **A16** erwähnten mit Phosphorsäure oder Phosphonsäuren modifizierten Epoxidharze oder mit Phosphorsäure oder Phosphonsäuren modifizierten Addukte von Epoxidharzen und Fettsäuren. Sie werden hergestellt durch Umsetzung vorzugsweise in einem Lösungsmittel von Phosphorsäure oder organischen Phosphonsäuren, die mindestens zweibasig sind, mit Epoxidharzen oder Addukten von Epoxidharzen und Fettsäuren. Dabei wird die Stoffmenge der eingesetzten Phosphor- oder Phosphonsäure üblicherweise so bemessen, daß sämtliche Epoxidgruppen durch die Umsetzung mit der Säure verbraucht werden, und daß eine ausreichende Anzahl von Säuregruppen auch nach der Reaktion noch zur Verfügung steht. Das entstandene Harz weist Hydroxylgruppen (aus der Reaktion der Oxirangruppe mit der Säurefunktion) auf, wobei diese Hydroxylgruppen in ß-Stellung zur Estergruppierung stehen, sowie Säuregruppen der Phosphor- bzw. Phosphonsäure, die nicht durch die Umsetzung mit dem Epoxid verbraucht wurden. Auch in diesem Fall wird eine Säurezahl von ca. 10 bis 60 mg/g angestrebt, bevorzugt 15 bis 55, und insbesondere 20 bis 50 mg/g. Die Menge der Hydroxylgruppen in **Ae** entspricht einer Hydroxylzahl von mindestens 10 mg/g, bevorzugt 15 bis 200 mg/g und insbesondere 25 bis 150 mg/g.

Die Härter **C** enthalten eine Kombination von wasserunlöslichen unblockierten Isocyanaten **C1** und hochreaktiven teilverätherten Aminoplastharzen **C2**. Dabei betragen bevorzugt die Massenanteile der Härterkomponenten **C1** und **C2** an der gesamten Masse der eingesetzten Härter 65 bis 95 % der Komponente **C1** und 35 bis 5 % der Komponente **C2**, wobei die Summe der Massenanteile selbstverständlich 100% ergeben muß.

Die unblockierten Isocyanate **C1** sind beliebige organische mehrfunktionelle Isocyanate mit aliphatisch, cycloaliphatisch, araliphatisch und/oder aromatisch gebundenen, freien Isocyanatgruppen, die bei Raumtemperatur flüssig sind. Die Isocyanatkomponente **C1** weist bei 23°C im allgemeinen eine Viskosität von 50 bis 20 000 mPa·s auf. Besonders bevorzugt handelt es sich bei der Isocyanatkomponente **C1** um mehrfunktionelle Isocyanate oder Gemische solcher Isocyanate mit ausschließlich aliphatisch und/oder cycloaliphatisch gebundenen Isocyanatgruppen einer zwischen 2,0 und 5,0 liegenden (mittleren) NCO-Funktionalität.

Falls erforderlich können die Isocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch im allgemeinen so bemessen, daß in den letztendlich erhaltenen erfindungsgemäßen Beschichtungsmitteln maximal Massenanteile von 30 % an Lösungsmitteln vorliegen, wobei auch das gegebenenfalls in den Polymerdispersionen oder -lösungen noch vorliegende Lösungsmittel mit in die Berechnung eingeht. Als Zusatzmittel für die Polyisocyanate geeignete Lösungsmittel sind beispielsweise aromatische Kohlenwasserstoffgemische wie "Solventnaphtha".

Als Komponente **C1** geeignete Isocyanate sind insbesondere Diisocyanate oder bevorzugt die sogenannten "Lackpolyisocyanate" mit aromatisch oder (cyclo)aliphatisch gebundenen Isocyanatgruppen, wobei die letztgenannten aliphatischen Isocyanate besonders bevorzugt sind.

Bei den Diisocyanaten handelt es sich um die auf dem Polyurethan- bzw. Lackgebiet bekannten Verbindungen, wie aliphatische, cycloaliphatische oder aromatische Diisocyanate. Diese besitzen vorzugsweise die Formel Q $(NCO)_2$, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und a,a,a',a'- Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter mehrfunktioneller Isocyanate sei beispielsweise auf die DE-A 29 28 552 verwiesen.

Sehr gut geeignet sind beispielsweise "Lackpolyisocyanate" auf Basis von Hexamethylendiisocyanat oder von 1-Isocyanato-3,3,5-trimethyl-4-isocyanatomethylcyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen Rest-Massenanteil von weniger als 0,5 % befreit worden sind. Zu den bevorzugten, erfindungsgemäß zu verwendenden aliphatischen mehrfunktionellen Isocyanaten gehören den obengenannten Kriterien entsprechende, Biuretgruppen aufweisende mehrfunktionelle Isocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden mehrfunktionellen Isocyanaten auf Basis von Hexamethylendiisocyanat, wie sie durch katalytische Oligomerisierung von Hexamethylendiisocyanat unter Verwendung von Trialkylphosphanen entstehen. Besonders bevorzugt sind die zuletzt genannten Gemische einer Viskosität bei 23 °C von 50 bis 20 000 mPa·s und einer zwischen 2,0 und 5,0 liegenden NCO-Funktionalität.

Bei den erfindungsgemäß ebenfalls geeigneten, jedoch weniger bevorzugten aromatischen mehrfunktionellen Isocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die eventuell im Anschluß an ihre Herstellung vorzugsweise destillativ von überschüssigen monomeren Diisocyanaten befreit worden sind.

Die Isocyanatkomponente **C1** kann im übrigen aus beliebigen Gemischen der beispielhaft genannten Isocyanate bestehen.

Als weitere Härterkomponente wird ein wasserverdünnbares Aminoplastharz **C2** insbesondere in einem Massenanteil von 5 bis 35 %, bevorzugt 10 bis 30, und besonders bevorzugt 15 bis 25 %, bezogen auf die Masse der gesamten Härter-Komponente eingesetzt. Das Aminoplastharz **C2** wird bevorzugt in teilverätherter Form eingesetzt. Insbesondere geeignet sind teilverätherte und teilweise methylolierte Melaminharze mit im Mittel 3 bis 5, bevorzugt ca. 4 Methoxymethyl- bzw. Alkoxymethyl-Gruppen pro Triazinring, wie Tetramethoxymethylmelamin, ebenso mit Butanol oder mit Mischungen aus Butanol und Methanol verätherte Typen, sowie die entsprechenden Benzoguanamin-, Caprinoguanamin- oder Acetoguanaminharze.

Die Harze **Ak** werden aus den Polyhydroxy-Komponenten **A1** und den Polycarboxyl-Komponenten **A2** unter Kondensationsbedingungen hergestellt, d. h. bei einer Temperatur von 80 bis 180 °C, bevorzugt zwischen 90 und 170 °C, vorzugsweise in Gegenwart von solchen Lösungsmitteln, die mit dem bei der Kondensation gebildeten Wasser Azeotrope bilden. Die Kondensation wird soweit geführt, daß die Harze **Ak** Säurezahlen von ca. 25 bis ca. 75 mg/g aufweisen, der Staudinger-Index beträgt dann ca. 13,5 bis 18 cm$^3$/g, bevorzugt 14,5 bis 16,5 cm$^3$/g, jeweils gemessen in Dimethylformamid als Lösungsmittel bei 20 °C. Nach zumindest teilweiser Neutralisation der verbliebenen Carboxyl- oder anderen Säure-Gruppen (wobei vorzugsweise 50 bis 95 % der Carboxyl- oder anderen Säure-Gruppen, besonders bevorzugt 60 bis 85 % neutralisiert werden) sind die Harze **Ak** in Wasser dispergierbar. Während der Kondensation kann man beobachten, daß die anfänglich trübe Reaktionsmasse sich klärt und eine homogene Phase bildet.

Die Zugabe des Härters erfolgt bevorzugt unmittelbar vor der Verarbeitung des Bindemittels. Es ist auch möglich, das Aminoplastharz **C2** bereits vor der Neutralisation des Kondensats **Ak** zuzugeben; das Isocyanat **C1** soll auf jeden Fall erst kurz vor der Verarbeitung zugesetzt werden. Die Zugabe des Isocyanats **C1** erfolgt bevorzugt unter intensiver Durchmischung, beispielsweise in schnellaufenden Mischern (Rotor-Stator-Mischern) oder erst beim Auftragen in bekannten Zweistoffdüsen.

Entsprechend wird bei Verwendung von Harzen **Ap** und/oder **Ae** als anionisch stabilisierten, Hydroxylgruppen aufweisenden Harzen **A** anstelle von oder in Mischung mit den Harzen **Ak** bezüglich des Anteils der neutralisierten verbliebenen Säuregruppen und der Zugabe der Härter **C** verfahren.

Die fertig formulierte Dispersion kann noch durch übliche Zusätze wie Pigmente, Korrosionsschutzmittel, Verlaufsmittel, Antiabsetzmittel, Haftverbesserer und Entschäumer dem vorgesehenen Anwendungszweck angepaßt werden.

Zur Formulierung von Klarlacken werden lediglich die üblichen Verlaufshilfsmittel, Entschäumer und gegebenenfalls Katalysatoren zugesetzt, die die Härtungsreaktion beschleunigen. Dazu werden üblicherweise Salze oder Komplexverbindungen von Übergangsmetallen wie Titan und Cer, oder von Hauptgruppenmetallen, die in verschiedenen Wertigkeitsstufen vorkommen, wie Antimon, Zinn oder Blei, eingesetzt.

Zur Formulierung von Füllern werden der Dispersion weiter organische oder anorganische Füllstoffe zugesetzt, wie Ruß, Titandioxid, feinteilige Kieselsäure, Silikate wie Kaolin oder Talkum, Kreiden, Schwerspat oder Eisenoxid-Pigmente; als organische Füllstoffe lassen sich gemahlene Thermoplasten wie Polyolefine, Polyester oder Polyamid einsetzen; bevorzugt sind auch durch Emulsionspolymerisation zugängliche, besonders auch vernetzte Polymerisate aus olefinisch ungesättigten Monomeren.

Die Füllerzusammensetzungen können femer die üblichen Lösungsmittel, insbesondere wassermischbare Lösungsmittel, enthalten. Die Herstellung dieser Füller erfolgt üblicherweise durch Vermahlen der Füllstoffe und Pigmente mit einem Teil der Dispersion unter Zusatz von Dispergierhilfsmitteln, Entschäumem und anderer Additive in geeigneten Dispergieraggregaten wie einer Perlmühle. Dabei wird die Teilchengröße der Füllstoffe und Pigmente bevorzugt auf unter 15 μm vermindert. Zu dieser Zubereitung wird anschließend der Rest der Dispersion sowie gegebenenfalls weitere Additive entsprechend dem angestrebten Pigment-Bindemittel-Massen-Verhältnis von 0,5:1 bis zu 2,5:1 zugesetzt. In der Masse der Pigmente wird hier auch die Masse der Füllstoffe einbezogen.

Die fertige Zubereitung kann durch die üblichen Verfahren, wie Rollen, Spritzen oder Walzen auf das Substrat aufgetragen werden. Besonders bevorzugt werden Spritzauftragstechniken, wie Druckluft-Spritzen, Airless-Spritzen oder das sogenannte "ESTA-Hochrotationsspritzen". Nach einer kurzen Ablüftzeit bei Raumtemperatur oder erhöhter Temperatur bis zu ca. 80 °C wird die Schicht bei ca. 90 bis ca. 130 °C eingebrannt. Die Schichtdicke nach dem Einbrennen beträgt üblicherweise ca. 15 bis ca. 120 μm, bevorzugt zwischen 25 und 70 μm.

Die erfindungsgemäße Kombination von wasserunlöslichen und hydrophilen Härterkomponenten bewirkt in der eingebrannten Schicht eine deutlich verbesserte Qualität der Klarlack-Filme, die frei von Defekten wie Trübungen und sogenannten Nadelstichen sind. Obwohl die Füllerschicht in der Automobil-Lackierung mit mindestens einer weiteren Schicht (Uni-Decklack) bzw. zwei weiteren Schichten (bei Metallic-Lack: pigmentierte Lackschicht mit Farbpigment und Metalleffekt-Pigment sowie einer Klarlack-Schicht) überzogen wird, beeinflußt die deutlich verbesserte Filmqualität der Füllerschicht (Verminderung der Häufigkeit von Fehlstellen) auch das Aussehen der fertigen Lackierung in wesentlichem Maß. Die Resistenz gegen Steinschlag wird nicht negativ beeinflußt.

Der spezifische Epoxidgruppengehalt "*SEG*" ist definiert als der Quotient der Stoffmenge an Epoxidgruppen $n$(EP) und der Masse $m_B$ der Substanz (und ist damit der Kehrwert des sog. "EV-Wertes" oder "Epoxid-Äquivalentgewichts" (EEW)); übliche Maßeinheit ist "mmol/kg":

$$SEG = n(\text{EP}) \,/\, m_{\text{B}}$$

Bei der Umsetzung von Epoxidverbindungen mit primären oder sekundären Aminen $R^1R^2$-NH ($R^1R^2$ sind Alkylreste mit 1 bis 20 C-Atomen, wobei $R^2$ im Fall eines primären Amins H bedeutet) bilden sich nach Addition unter Ringöffnung β-Hydroxyamine der Struktur - CH (OH) - $CH_2$ - N $R^1R^2$. Da für jede umgesetzte Epoxidgruppe eine ß-Hydroxyamin-Gruppe gebildet wird, ist die Anzahl an β-Hydroxyamin-Gruppen ("EPA-Wert", Stoffmenge der β-Hydroxyamin-Gruppen geteilt durch die Masse der Probe) und an nicht umgesetzten Epoxidgruppen nach der Reaktion gleich der der ursprünglich vorhandenen Epoxidgruppen.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben.

Konzentrationsangaben in "%" sind Massenanteile des gelösten Stoffes in der Lösung (Masse des gelösten Stoffes, dividiert durch die Masse der Lösung).

**Beispiele**

**1 Herstellung der Carboxylkomponente A (PCPU1)**

In ein Reaktionsgefäß mit Rühr-, Kühl- und Heizvorrichtung wurden 675 g Dimethylolpropionsäure, 180 g Äthylglykol, 543 g Diglykoldimethyläther und 271 g Methylisobutylketon eingewogen und auf 100 °C erwärmt. Bei 100 °C wurden unter Beachtung der exothermen Reaktion 1044 g Toluylendiisocyanat zugetropft und die Temperatur solange gehalten, bis der Massenanteil an freien Isocyanatgruppen auf unter 0,1 % abgesunken war. Anschließend wurde mit ca. 540 g Diglykoldimethyläther und ca. 270 g Methylisobutylketon verdünnt. Man erhielt eine klare Harzlösung mit einer Viskosität von 500 mPa·s (gemessen bei 23 °C nach DIN EN ISO 3219 an einer Lösung von 46 g Harz in 100 g Lösung in Diglykoldimethyläther), einem Festkörper-Massenanteil von ca. 60 % und einer Säurezahl von 140 mg/g.

**2 Herstellung der Carboxylkomponente B (PCLM)**

300 g Leinöl wurden unter Stickstoffatmosphäre mit 100 g Maleinsäureanhydrid gemischt und in 4 Stunden auf 200 °C erhitzt. Die Temperatur von 200 °C wurde solange gehalten, bis kein freies Maleinsäureanhydrid mehr nachzuweisen war. Nach Abkühlen auf 85 °C wurde der Ansatz mit einer Mischung aus 30 g voll entsalztem (VE-) Wasser und 3 g Triäthylamin versetzt und solange gehalten, bis eine Säurezahl von 200 mg/g erreicht wurde. Anschließend wurde mit 85 g Methoxypropoxypropanol verdünnt. Die so erhaltene Harzlösung hatte einen Festkörper-Massenanteil von ca. 80%.

**3 Herstellung der Hydroxylkomponente C (PHEP)**

838 g Methoxypropoxypropanol, 1800 g ®Epikote 1007 (Epoxidharz auf Basis von Bisphenol A mit einer gewichtsmittleren molaren Masse $M_w$ von 2900 g/mol und einem spezifischen Gehalt an Epoxidgruppen "SEG" von ca. 5300 mmol/kg) und 56 g Tallölfettsäure 150 wurden unter Zusatz eines Veresterungskatalysators bei 170 °C solange gehalten, bis ein Säurezahlwert von unter 1 mg/g bestimmt wurde. Nach Kühlen auf 100 °C wurden 84 g Diäthanolamin zugesetzt und die Temperatur gehalten, bis der spezifische Gehalt an ß-Hydroxyamingruppen ("EPA-Wert") zuzüglich dem spezifischen Gehalt an nicht umgesetzten Epoxidgruppen auf 360 mmol/kg abgesunken war. Nach Zugabe von 50 g ®Cardura E 10 (Glycidylester der Neodecansäure) wurde die Temperatur auf 160 °C erhöht und gehalten. Diese Phase wurde beendet, als der spezifische Gehalt der Probe an ß-Hydroxyamingruppen ("EPA-Wert") zuzüglich noch unumgesetzten Epoxidgruppen 340 mmol/kg betrug.

**4 Herstellung der Hydroxylkomponente D (PHPU1)**

In einem geeigneten Reaktionsgefäß wurden 183 g Dipropylenglykol, 35 g Isononansäure, 68,5 g Pentaerythrit, 175 g Isophthalsäure mit 0,5 g Dibutylzinndilaurat als Katalysator bei 220 °C bis zu einer Säurezahl von weniger als 5 mg/g verestert. Der Ansatz wurde bei 70 °C mit Methyläthylketon auf einen Festkörper-Massenanteil von 65 % verdünnt und mit 60 g Toluylendiisocyanat versetzt. Die Temperatur wurde solange gehalten, bis keine freien NCO-Gruppen mehr nachweisbar waren.

### 5 Herstellung der Hydroxylkomponente F (PHES1)

106 g Tripropylenglykol, 87 g Hexandiol und 104 g Trimellithsäureanhydrid wurden mit 0,2 g Dibutylzinndilaurat als Katalysator bei 180 °C bis zu einer Säurezahl von ca. 20 mg/g verestert. Am Ende der Reaktion wurde an einer Lösung von 55 g Harz in 100 g Lösung in Butylglykol nach DIN EN ISO 3219 bei 23 °C eine Viskosität von ca. 500 mPa·s gemessen.

### 6 Herstellung der Hydroxylkomponente G (PHES2)

79 g Dipropylenglykol, 87 g Hexandiol und 90 g Trimellithsäureanhydrid wurden mit 0,2 g Dibutylzinndilaurat als Katalysator bei 180 °C bis zu einer Säurezahl von ca. 20 mg/g verestert. Die Viskosität am Ende der Reaktion betrug 500 mPa·s, gemessen nach DIN EN ISO 3219 bei 23 °C an einer Lösung von 55 g Harz in 100 g Lösung in Butylglykol.

### 7 Herstellung der Carboxylkomponente H (PCPU2)

In ein Reaktionsgefäß mit Rühr-, Kühl- und Heizvorrichtung wurden 270 g Dimethylolpropionsäure, 134 g Dipropylenglykol, 180 g Äthylglykol, 367 g Diglykoldimethyläther und 183 g Methylisobutylketon eingewogen und auf 100 °C erwärmt. Bei 100 °C wurden unter Beachtung der exothermen Reaktion 696 g Toluylendiisocyanat zugetropft und die Temperatur solange gehalten, bis der Massenanteil an freien Isocyanatgruppen auf unter 0,1 % abgesunken war. Anschließend wurde mit ca. 260 g Diglykoldimethyläther und ca. 130 g Methylisobutylketon verdünnt. Man erhielt eine klare Harzlösung mit einer Viskosität von 200 mPa·s (gemessen bei 23 °C nach DIN EN ISO 3219 an einer Lösung von 46 g Harz in 100 g Lösung in Diglykoldimethyläther), einem Festkörper-Massenanteil von ca. 60 % und einer Säurezahl von 95 mg/g.

### 8 Herstellung des Bindemittels 1

65 g der Komponente C (PHEP) und 35 g der Komponente A (PCPU1) wurden gemischt und auf 150 °C aufgeheizt. Das vorhandene Lösungsmittel wurde vor der Kondensationsreaktion durch Destillation unter vermindertem Druck weitgehend entfernt, am Anfang der Reaktion betrug der Festkörper-Massenanteil der Reaktionsmischung ca. 75 %. Die Temperatur wurde gehalten, bis ein Säurezahl von 40 bis 45 mg/g und eine Viskosität von 450 mPa·s (gemessen nach DIN EN ISO 3219 bei 23 °C an einer Lösung von 26 g Harz in 100 g Lösung in Butylglykol) erreicht wurde. Der Ansatz wurde mit Dimethyläthanolamin neutralisiert und mit VE-Wasser auf einen Festkörper-Massenanteil von 30 % eingestellt.

### 9 Herstellung des Bindemittels 2

70 g der Komponente D (PHPU1) und 30 g der Komponente B (PCLM) wurden gemischt. Bei einer Reaktionstemperatur von 100 °C wurde kondensiert, bis ein Säurezahlwert von 65 bis 70 mg/g erreicht war, die Viskosität einer Lösung von 40 g Harz in 100 g Lösung in Butylglykol gemessen nach DIN EN ISO 3219 bei 23 °C betrug 450 m Pa·s. Anschließend wurde mit Dimethyläthanolamin neutralisiert und mit voll entsalztem (VE-) Wasser auf einen Festkörper-Massenanteil von 35 % verdünnt.

### 10 Herstellung des Bindemittels 3

137 g Diäthylenglykol wurden unter Stickstoffatmosphäre mit 152 g Trimethylolpropan, 109 g Isophthalsäure, 96 g Adipinsäure und 198 g Phthalsäureanhydrid gemischt und auf 180 ° C erhitzt, wobei entstehendes Reaktionswasser über einen Wasserabscheider entfernt wurde. Die Temperatur wurde solange gehalten, bis die Säurezahl 60 mg/g betrug. Nach Abkühlen auf 160 °C wurde der Ansatz mit ca. 370 g Butylglykol verdünnt. Die so erhaltene Harzlösung hatte einen Festkörper-Massenanteil von 60 % und eine Viskosität von ca. 4000 m Pa·s, gemessen nach DIN EN ISO 3219 bei 23 °C.

### 11 Herstellung des Bindemittels 4

### Stufe a Fettsäureester

57 g Epoxidnovolak ®DEN 431 (Dow Chemical; mittlere Funktionalität 2,2; spezifischer Gehalt an Epoxidgruppen ca. 5700 mmol/kg) und 18,5 g Leinölfettsäure wurden mit einem Veresterungskatalysator versetzt und unter Beachtung der Exothermie auf 150 °C erhitzt. Die Temperatur wurde solange gehalten, bis die Säurezahl auf unter 1 mg/g abgesunken war. Anschließend wurden 44 g Diacetonalkohol und 25 g Epoxidharz ®DER 664 (Dow Chemical; Epoxidharz auf Basis von Bisphenol A; Typ 4; spezifischer Gehalt an Epoxidgruppen ca. 1100 mmol/kg) zugegeben. Nach guter Homogenisierung wurde auf 50 °C gekühlt.

**Stufe b Phosphorsäureester**

Eine Mischung aus 10 g Phosphorsäure (75 %ige Lösung in Wasser) und 25 g Diacetonalkohol wurde auf 50 °C erwärmt. Anschließend wurde der Fettsäureester der Stufe **a** portionsweise so zugegeben, daß durch die auftretende Exothermie die Temperatur gehalten werden konnte. Es wurde so lange gerührt, bis der spezifische Gehalt an Epoxidgruppen unter 0,1 mmol/g gesunken war. Mit Diacetonalkohol wurde auf einen Festkörper-Massenanteil von 60 % eingestellt, die Viskosität gemessen nach DIN EN ISO 3219 bei 23 °C an einer Lösung von 45 g Harz in 100 g einer Lösung in Methoxypropoxypropanol betrug 500 m Pa·s.

**12 Herstellung des Bindemittels 5**

75 g der Komponente G (PHES2) und 25 g der Komponente H (PCPU2) wurden gemischt und auf 150 °C aufgeheizt. Das vorhandene Lösungsmittel wurde durch Destillation unter vermindertem Druck weitgehend entfernt. Die Temperatur von 150 °C wurde gehalten, bis eine Säurezahl von 35 bis 40 mg/g und eine Viskosität von 600 mPa·s erreicht war (gemessen nach DIN EN ISO 3219 bei 23 °C an einer Lösung von 45 g Harz in 100 g einer Lösung in Butylglykol). Nach Abkühlen auf 95 °C wurde mit Dimethyläthanolamin neutralisiert und mit VE-Wasser auf einen Festkörper-Massenanteil von 30 % verdünnt.

**13 Herstellung des Bindemittels 6**

75 g der Komponente F (PHES1) und 25 g der Komponente H (PCPU2) wurden gemischt und auf 150 ° aufgeheizt. Das vorhandene Lösungsmittel wurde durch Destillation unter vermindertem Druck weitgehend entfernt. Die Temperatur von 150 °C wurde gehalten, bis eine Säurezahl von 35 bis 40 mg/g und eine Viskosität von 600 mPa·s erreicht war (gemessen nach DIN EN ISO 3219/23 °C an einer Lösung von 45 g Harz in 100 g einer Lösung in Butylglykol). Nach Abkühlen auf 95 °C wurde mit Dimethyläthanolamin neutralisiert und mit VE-Wasser auf einen Festkörper-Massenanteil von 30 % verdünnt.

**14 Herstellung von Klarlacken**

Gemäß den in der Tabelle 1 zusammengefaßten Rezepturen (eingesetzte Massen der betreffenden Komponenten in g) wurden die Klarlacke 1 bis 12 hergestellt. Dabei wurden die folgenden Stoffe verwendet:

| | |
|---|---|
| ®Maprenal VMF 3921: | teilveräthertes hochreaktives Melaminharz (im Durchschnitt 4 Methoxymethylgruppen pro Molekül Melamin) der Vianova Resins GmbH & Co. KG |
| ®Bayhydur 3100: | hydrophil modifiziertes (wasserdispergierbares) mehrfunktionelles Isocyanat der Bayer AG auf Basis von Hexamethylendiisocyanat mit einem Massenanteil an Isocyanatgruppen von ca. 17,4 % |
| ®Desmodur N 3600: | aliphatisches mehrfunktionelles Isocyanat der Bayer AG auf Basis von Hexamethylendiisocyanat, Lösung von 90 g des Isocyanats in 100 g Lösung, das Lösungsmittel ist eine Mischung von Butylacetat und "Solvent Naphtha 100" im Massenverhältnis von 1:1 |
| ®Basonat P LR 8878: | lösungsmittelfreies hydrophiles mehrfunktionelles aliphatisches Isocyanat der BASF AG auf Basis von Hexamethylendiisocyanat mit einem Massenanteil an Isocyanatgruppen von 17 bis 18 % |
| ®Proglyde DMM | Dipropylenglykoldimethyläther |
| Vernetzungskatalysator: | Zirkon-Komplexverbindung ®K-Kat XC 6212 (King Industries) |
| ®Additol XW 392: | Härtungsbeschleuniger auf Basis von organischen Phosphaten (Vianova Resins GmbH & Co. KG) |

Die so hergestellten Klarlacke wurden mittels eines 200 μm-Rakel auf gereinigte Glasplatten appliziert. Nach 15-minütigem Ablüften wurden die Filme 20 Minuten bei 90 °C forciert getrocknet.

Tabelle 1: Klarlackbeispiele

| | Lack 1 | Lack 2 | Lack 3 | Lack 4 | Lack 5 | Lack 6 | Lack 7 | Lack 8 |
|---|---|---|---|---|---|---|---|---|
| Bindemittel 3 (40 % in Wasser) | 50 | 50 | 50 | 50 | 50 | 50 | 50 | 50 |
| ®Maprenal VMF 3921 | 5,9 | 5,9 | 5,9 | 5,9 | - | 5,9 | 5,9 | 5,9 |
| ®Bayhydur 3100 | 25 | | | | | | | |
| ®Desmodur N 3600 | | | 25 | 25 | 25 | | | |
| ®Basonat P LR 8878 | | 25 | | | | | | |
| ®Proglyde DMM | 6,25 | 6,25 | 6,25 | 6,25 | 6,25 | | | |
| deionisiertes Wasser | 25 | 25 | 11 | 16 | 17 | 15 | 15 | 15 |
| Vernetzungskatalysator | | | | 0,2 | 0,2 | | | 0,2 |
| ®Additol XW 392 | | | | | | | 1,25 | |
| Aussehen des gehärteten Lackfilms | klar, keine Film-defekte | klar, keine Film-defekte | klar, keine Film-defekte | klar, keine Film-defekte | trüb, Nadel-stiche, Film-defekte | klar, keine Film-defekte | klar, keine Film-defekte | klar, keine Film-defekte |
| Pendelhärte [1]          in s | 18 | 21 | 18 | 93 | 68 | 21 | 18 | 16 |
| Pendelhärte [24]          in s | 95 | 91 | 176 | 176 | 92 | 24 | 21 | 20 |

Pendelhärte, gemessen nach König (DIN 53 157) nach forcierter Trocknung (20 Minuten bei 90°C) und Lagerung während 1 ("Pendelhärte [1]") bzw. 24 ("Pendelhärte [24]") Stunden bei Normklima

|  | Lack 9 | Lack 10 | Lack 11 | Lack 12 |
|---|---|---|---|---|
| Bindemittel 4 (35 % in Wasser) | 46,5 | 46,5 | 46,5 | 46,5 |
| ®Maprenal VMF 3921 | 4,7 | 4,7 | 4,7 | --- |
| ®Desmodur N 3600 | 8,0 | -- | -- | 8,0 |
| ®Basonat P LR 8878 | -- | 8,0 | -- | -- |
| N-Methylpyrrolidon | 2,0 | 2,0 | -- | 2,0 |
| deionisiertes Wasser | 18,5 | 20,5 | 18,5 | 18,5 |
| Vernetzungskatalysator | 0,16 | 0,16 | -- | 0,16 |
| ®Additol XW 392 | 1,0 | 1,0 | 1,0 | 1,0 |
| Aussehen des gehärteten Lackfilms | klar, keine Filmdefekte | klar, keine Filmdefekte | klar, keine Filmdefekte | trüb, Nadelstiche, Filmdefekte |
| Pendelhärte [1] in s | 136 | 59 | 20 | 91 |
| Pendelhärte [24] in s | 153 | 70 | 28 | 112 |

**Ergebnis:**

Die nur mit Melaminharz gehärteten Klarlacke geben - auch in Kombination mit diversen Katalysatoren - (Lacke 6, 7, 8, 11) nach 20 minütiger Härtung bei 90 °C nicht ausreichend hohe Filmhärten und sind für einen praktischen Einsatz somit nicht brauchbar.

Die Vernetzung nur mit unblockierten Isocyanathärtern (Beispiele 5 und 12) führt zu besseren Filmhärten, aufgrund der Unverträglichkeit Bindemittel/Isocyanat kommet es jedoch zu Filmdefekten, was einem praktischen Einsatz ebenfalls entgegensteht. Defektfreie Lackfilme wurden mit der Kombination aus Melaminharz und hydrophilem Isocyanathärter erzielt (Beispiele 1, 2 und 10), jedoch ist in diesen Fällen die erreichte Härte noch unzureichend. Nur die Kombination eines erfindungsgemäßen Bindemittels mit einem Melaminharz und unblockiertem Isocyanat führt zu den erwünschten störungsfreien Filmen mit hohen Pendelhärten (Beispiele 3, 4 und 9). Die Gegenwart eines Vernetzungskatalysators bewirkt, daß schon nach kurzer Lagerzeit eine hohe Härte erreicht wird, ohne Katalysator entwickelt sich die Härte erst nach ca. 24 h Lagerung bei Normklima, anschließend an die in allen Fällen vorausgegangene forcierte Trocknung (20 Minuten bei 90 °C).

**15 Herstellung von Füllerlacken**

Mit den in der Tabelle 2 angegebenen Rezepturen (Massen der betreffenden Komponenten in Gramm) wurden nach der dem Fachmann bekannten Vorgehensweise wäßrige Füllerlacke hergestellt. Diese wurden mittels eines 200 µm-Rakel auf gereinigten Glasplatten appliziert. Die Lacke 13 und 14 wurden nach 15-minütigem Ablüften 20 Minuten bei 90 °C forciert getrocknet.

Tabelle 2: Füllerlacke

|  | Lack 13 | Lack 14 | Vergleich: Bsp. 4 aus EP-B 0 594 685 |
|---|---|---|---|
| Bindemittel 4 (35 % in Wasser) | 50 |  |  |
| Bindemittel 5 (35 % in Wasser) |  | 50 |  |
| Netzmittel | 0,3 | 0,3 |  |

Tabelle 2: Füllerlacke   (fortgesetzt)

|  | Lack 13 | Lack 14 | Vergleich: Bsp. 4 aus EP-B 0 594 685 |
|---|---|---|---|
| Titandioxid | 15 | 11,7 | |
| Füllstoffe | 15 | 18,3 | |
| ®Additol VXW 4971 | 0,3 | 0,3 | |
| deionisiertes Wasser | 18,5 | 18,5 | |
| Methoxypropoxypropanol | 1,5 | 1,5 | |
| ®Maprenal VMF 3921 | 5,1 | 5,1 | |
| ®Desmodur N 3600 | 8,55 | 6,85 | |
| ®Basonat P LR 8878 | | 1,7 | |
| N-Methylpyrrolidon | 1,45 | 1,45 | |
| Vernetzungskatalysator | 0,17 | 0,17 | |
| ®Additol XW 392 | 1,05 | 1,05 | |
| Aussehen des gehärteten Lackfilms | störungsfrei | störungsfrei | |
| Trockenfilmschichtstärke in μm | 42 | 42 | 40 |
| Pendelhärte[1]          in s | 98 | 81 | 60 |
| Pendelhärte [24]          in s | 108 | 95 | 74 |
| ®Additol VXW4971: Verlaufs-und Benetzungsadditiv (Vianova Resins GmbH & Co. KG) | | | |

Bei dem Vergleichsbeispiel handelte es sich um einen wäßrigen Füller gemäß der EP-A 0 594 685, Beispiel 4). Dieser wurde wie die Lacke 13 und 14 appliziert und abgelüftet, jedoch anschließend 20 Minuten bei 165 °C eingebrannt.

**Prüfbleche für Steinschlagtest:**

Prüfaufbau: Bonder 26 60 OC als Substrat, 25 μm einer üblichen ETL-Grundierung, 35 μm wäßriger Füller basierend auf Lack 13, 14 bzw. Vergleich, 40 μm handelsüblicher Acryl-Melamin Decklack

| | |
|---|---|
| Einbrennbedingung ETL-Grundierung | 30 Minuten bei 165 °C |
| Einbrennbedingung für Füller | Lack 13 und Lack 14: 20 Minuten bei 90 °C, Vergleich: 20 Minuten bei 165 °C |
| Einbrennbedingung für Decklack | 30 Minuten bei 140 °C |

Die so vorbereiteten lackierten Prüfbleche wurden 24 Stunden bei Normklima gelagert und anschließend einem Steinschlagtest gemäß der VDA-Norm 621 - 487 unterzogen (2 Durchläufe mit jeweils 0,5 kg kantigem Beschußmaterial, Druck: 0,1 MPa (=1 bar))

Prüfblech 1: ETL-Grundierung, Füller auf Basis von Lack 13, Decklack
Prüfblech 2: ETL-Grundierung, Füller auf Basis von Lack 14, Decklack
Prüfblech 3: ETL-Grundierung, Vergleichsfüller, Decklack

**Ergebnis:**

Die beiden mit unblockiertem Isocyanat und Melaminharz vernetzten Füller ergeben nach forcierter Trocknung (20 Minuten bei 90 °C) störungsfreie Beschichtungen und liegen beide in der Filmhärte höher als der wäßrige Einbrennfüller (Stand der Technik), der 20 Minuten bei 165 °C eingebrannt wurde. Die Qualität der Oberfläche war trotz der "egalisierenden " Wirkung der Decklackschicht bei den Prüfblechen 1 und 2 (erfindungsgemäß) besser als bei dem bei höherer Temperatur eingebrannten Vergleichsfüller.
Die in Tabelle 3 aufgelisteten Steinschlagkennwerte zeigen, daß mit den erfindungsgemäßen Füllern nach forcierter Trocknung (20 Minuten bei 90 °C) in dem beschriebenen Lackaufbau annähernd gleiche Ergebnisse erzielt wurden wie bei dem Füller gemäß dem Stand der Technik (20 Minuten bei 165 °C eingebrannt).

Tabelle 3: Steinschlagtest

|  | Prüfblech 1 | Prüfblech 2 | Prüfblech 3 |
|---|---|---|---|
| Steinschlagkennwert | 1-2 | 1 | 0-1 |

Bewertung gemäß der Norm:    Decklackhaftung ( 0 = kein Abplatzen des Decklacks von Füller, 10 = keine Haftung zwischen Decklack und Füller)

**Patentansprüche**

1. Wäßriges Beschichtungsmittel, enthaltend

   - ein Kondensationsprodukt **Ak** aus einem Carboxylgruppen aufweisenden Harz **A1** und einem Hydroxylgruppen aufweisenden Harz **A2,** und
   - einen bereits bei Temperaturen von unter 120 °C wirksam werdenden Härter **C**, dadurch gekennzeichnet, daß der Härter eine Mischung aus einem wasserunlöslichen unblockierten Isocyanat **C1** und einem hydrophilen teilverätherten Aminoplastharz **C2** enthält.

2. Wäßriges Beschichtungsmittel nach Anspruch 1, dadurch gekennzeichnet, daß anstelle eines Carboxylgruppen aufweisenden Harzes **A1** oder in Mischung mit diesem ein Harz **A16** eingesetzt wird, ausgewählt aus mit Phosphorsäure oder Phosphonsäuren modifizierten Epoxidharzen und mit Phosphorsäure oder Phosphonsäuren modifizierten Umsetzungsprodukten von Epoxidharzen mit Fettsäuren.

3. Wäßriges Beschichtungsmittel nach Anspruch 1 oder 2, dadurch gekennzeichnet, daß das Kondensationsprodukt **Ak** eine Säurezahl von 25 bis 75 mg/g aufweist.

4. Wäßriges Beschichtungsmittel nach Anspruch 1 oder 2, dadurch gekennzeichnet, daß die Komponente **A1** eine Säurezahl von 100 bis 230 mg/g aufweist.

5. Wäßriges Beschichtungsmittel nach Anspruch 1 oder 2, dadurch gekennzeichnet, daß die Komponente **A2** eine Hydroxylzahl von 50 bis 500 mg/g aufweist.

6. Wäßriges Beschichtungsmittel nach Anspruch 1, dadurch gekennzeichnet, daß anstelle des Kondensationsproduktes **Ak** oder in Mischung mit diesem andere anionisch stabilisierte Harze enthalten sind, ausgewählt aus Polyestem **Ap** mit einem Überschuß an Säuregruppen und auf Epoxidharzen basierenden Harzen **Ae,** die durch Umsetzung von Epoxidharzen oder addukten von Epoxidharzten und Fettsäuren mit Phorphorsäure oder Phosphonsäuren erhalten werden.

7. Wäßriges Beschichtungsmittel nach Anspruch 6, dadurch gekennzeichnet, daß die Säurezahl der Harze **Ap** und/ oder **Ae** 10 bis 60 mg/g und ihre Hydroxylzahl mindestens 10 mg/g beträgt.

8. Wäßriges Beschichtungsmittel nach Anspruch 1, 2 oder 6, dadurch gekennzeichnet, daß der Härter **C** eine Mischung aus Massenanteilen von 65 bis 95 % eines wasserunlöslichen unblockierten mehrfunktionellen Isocyanats **C1** und 5 bis 35 % eines wasserverdünnbaren teilweise verätherten und teilweise methylolierten Aminoplastharzes **C2** ist.

9. Wäßriges Beschichtungsmittel nach Anspruch 1, 2 oder 6, dadurch gekennzeichnet, daß der Härter **C2** ein teilveräthertes und teilweise methyloliertes Melaminharz mit im Mittel 3 bis 5 Methoxymethyl- bzw. Alkoxymethyl-Gruppen pro Triazinring ist.

10. Wäßriges Beschichtungsmittel nach Anspruch 1, 2 oder 6, dadurch gekennzeichnet, daß der Härter **C1** eine Viskosität von 50 bis 20 000 mPa·s bei 23 °C aufweist.

11. Wäßriges Beschichtungsmittel nach Anspruch 1 oder 2, dadurch gekennzeichnet, daß die Säuregruppen der Harze **Ak** zu 60 bis 95 % neutralisiert sind.

12. Verfahren zur Herstellung von wäßrigen Beschichtungsmitteln nach Anspruch 1 oder 2, dadurch gekennzeichnet, daß aus den Carboxylgruppen aufweisenden Harzen **A1** bzw. den Harzen **A16** und den Hydroxylgruppen aufweisenden Harzen **A2** unter Polykondensationsbedingungen ein Harz **Ak** hergestellt wird, dessen verbliebene Säuregruppen zu 60 bis 95 % neutralisiert werden, das neutralisierte Harz **Ak** in Wasser dispergiert wird, und die wäßrige Dispersion vor der Applikation mit dem Härter **C** vermischt wird.

13. Verwendung von wäßrigen Beschichtungsmitteln nach Anspruch 1, 2 oder 6 zur Herstellung von Füllerschichten auf metallischen Substraten.